# EUROPEAN PATENT APPLICATION

(11) **EP 4 340 416 A1**
(43) Date of publication of application: **20.03.2024**
(21) Application number: 21941408.3
(22) Date of filing: 14.05.2021
(51) Int. Cl.: H04W 8/18, H04W 24/02

(54) **EARLY WARNING INFORMATION SENDING METHOD AND RECEIVING METHOD, APPARATUSES, DEVICE AND MEDIUM**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Novagraaf Technologies
(86) International application number: PCT/CN2021/093963
(87) International publication number: WO 2022/236839

(57) **Abstract**

The present application discloses an early warning information sending method and receiving method, apparatuses, a device and a medium, which relate to the field of mobile communications. The early warning information sending method is applied to a first network element, and the method comprises: receiving a subscription request for early warning information from a subscriber; monitoring a target parameter of a subscribed party according to the subscription request, the target parameter being used to determine early warning information; and sending the early warning information on the basis of a monitoring result of the target parameter, the subscriber comprising at least one among a terminal and an application server. The present application sends the early warning information to a subscriber on the basis of a monitoring result of monitoring a target parameter of a subscribed party, so that the subscriber may obtain corresponding early warning information according to a subscription request.

## Description

### TECHNICAL FIELD

The present application relates to the field of mobile communication, and in particular, to a method for sending and a method for receiving early warning information, an apparatus, a device and a medium.

### BACKGROUND

In mobile communication, data exchange is guaranteed between the terminal and the application server through the mobile communication network. The mobile communication network includes a Radio Access Network (RAN) and a Core Network (CN).

For example, the terminal performs partial operations on the data to form intermediate data, and then sends the data to one or more network elements in the CN through the RAN for further processing, and the CN sends the processed data results to the application server. In this process, the communication quality between the terminal and the application server plays a crucial role in data exchange.

Since the terminal, RAN, CN, and application server belong to four different domains, and each domain cannot obtain the parameter information of other domains, the communication quality between the terminal and the application server is poor, and data exchange cannot be performed in time, affecting efficiency of data exchange and analysis.

### SUMMARY

The embodiments of the present application provide a method for sending and a method for receiving early warning information, an apparatus, a device, and a medium. The first network element sends the early warning information according to the subscription request, so that the terminal and the application server can acquire the early warning information corresponding to the subscription request in other domains, which realizes the information exchange between different domains. The technical solutions are as follows.

According to one aspect of the present application, a method for sending early warning information is provided, the method is applied to a first network element, and the method includes:
receiving a subscription request for early warning information from a subscriber;
monitoring a target parameter of a subscribed party according to the subscription request, where the target parameter is used for determining the early warning information;
sending the early warning information based on the monitoring result of the target parameter;
where the subscriber includes at least one of a terminal or an application server.

According to one aspect of the present application, a method for receiving early warning information is provided, the method is applied to a subscriber, and the method includes:
sending a subscription request for early warning information, where the early warning information is generated by a first network element according to a monitoring result of a target parameter of a subscribed party;
receiving the early warning information;
where the subscriber includes at least one of a terminal or an application server.

According to one aspect of the present application, an apparatus for sending early warning information is provided, the apparatus including:
a receiving module, configured to receive a subscription request for early warning information from a subscriber;
a monitoring module, configured to monitor a target parameter of a subscribed party according to the subscription request, where the target parameter is used for determining the early warning information;
a sending module, configured to send the early warning information based on the monitoring result of the target parameter;
where the subscriber includes at least one of a terminal or an application server.

According to one aspect of the present application, an apparatus for receiving early warning information is provided, the apparatus including:
a sending module, configured to send a subscription request for early warning information, where the early warning information is generated by a first network element according to a monitoring result of a target parameter of a subscribed party;
a receiving module, configured to receive the early warning information;
where a subscriber includes at least one of a terminal or an application server.

According to one aspect of the present application, a network device is provided, which includes a processor, a transceiver connected to the processor, and a memory for storing executable instructions of the processor; where the processor is configured to load and execute the executable instructions to implement the above-mentioned method for sending early warning information.

According to one aspect of the present application, a terminal is provided, the terminal includes a processor, a transceiver connected to the processor, and a memory for storing executable instructions of the processor; where the processor is configured to load and execute the executable instructions to implement the above-mentioned method for receiving the early warning information.

According to one aspect of the present application, an application server is provided, which includes a processor, a transceiver connected to the processor, and a memory for storing executable instructions of the processor; where the processor is configured to load and execute the executable instructions to implement the above-mentioned method for receiving early warning information.

According to one aspect of the present application, a computer-readable storage medium is provided, and executable instructions are stored in the readable storage medium, and the executable instructions are loaded and executed by a processor to implement the above-mentioned method for sending early warning information or method for receiving early warning information.

According to one aspect of the present application, a computer program product is provided. When the computer program product runs on a processor of a computer device, the computer device executes the method for sending early warning information or the method for receiving early warning information described in the above aspects.

According to one aspect of the present application, a chip is provided, the chip includes a programmable logic circuit or a program, and the chip is used for implementing the above-mentioned method for sending early warning information or method for receiving early warning information.

The technical solutions provided by the embodiments of the present application at least include the following beneficial effects.

The first network element monitors the target parameter of the subscribed party by receiving the subscription request of the subscriber for the early warning information, and sends the early warning information to the subscriber based on the monitoring result of the target parameter. That is, the first network element sends the early warning information according to the subscription request, so that the terminal and the application server can acquire the early warning information corresponding to the subscription request, thereby realizing the information interaction among the terminal, the first network element and the application server, and avoiding idle network resources.

### BRIEF DESCRIPTION OF THE DRAWINGS

In order to more clearly illustrate the technical solutions in the embodiments of the present application, the drawings that need to be used in the description of the embodiments will be briefly introduced below. Obviously, the drawings in the following description are only some embodiments of the present application. For those skilled in the art, other drawings can also be obtained based on these drawings without creative effort.
FIG. 1 is a schematic diagram of an architecture of an early warning system provided by an exemplary embodiment of the present application;
FIG. 2 is a flowchart of a method for sending early warning information provided by an exemplary embodiment of the present application;
FIG. 3 is a flowchart of a method for sending early warning information provided by an exemplary embodiment of the present application;
FIG. 4 is a flowchart of a method for sending early warning information provided by an exemplary embodiment of the present application;
FIG. 5 is a flowchart of a method for receiving early warning information provided by an exemplary embodiment of the present application;
FIG. 6 is a flowchart of a method for sending and receiving early warning information provided by an exemplary embodiment of the present application;
FIG. 7 is a flowchart of a method for receiving early warning information provided by an exemplary embodiment of the present application;
FIG. 8 is a schematic diagram of a method for sending and receiving early warning information provided by an exemplary embodiment of the present application;
FIG. 9 is a schematic diagram of a method for sending and receiving early warning information provided by an exemplary embodiment of the present application;
FIG. 10 is a flowchart of a method for sending and receiving early warning information provided by an exemplary embodiment of the present application;
FIG. 11 is a flowchart of a method for sending and receiving early warning information provided by an exemplary embodiment of the present application;
FIG. 12 is a flowchart of an apparatus for sending early warning information provided by an exemplary embodiment of the present application;
FIG. 13 is a flowchart of an apparatus for receiving early warning information provided by an exemplary embodiment of the present application;
FIG. 14 is a block diagram of a communication device provided by an exemplary embodiment of the present application.

### DETAILED DESCRIPTION

In order to make the purpose, technical solutions and advantages of the present application clearer, the implementation manners of the present application will be further described in detail below in conjunction with the accompanying drawings.

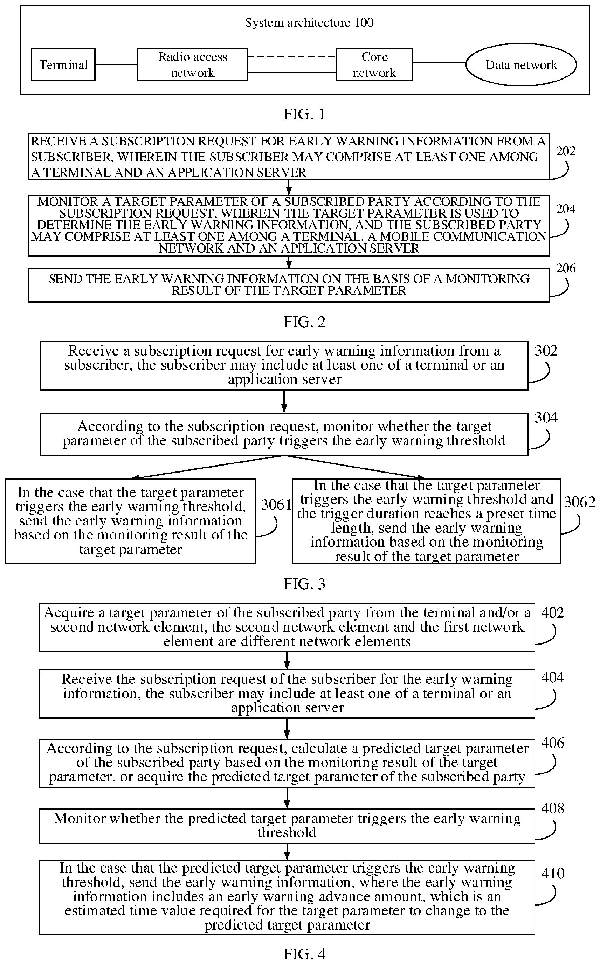

FIG. 1 shows a schematic diagram of an architecture of an early warning system provided by an exemplary embodiment of the present application. The system architecture 100 may include: a terminal, a RAN, a CN, and a Data Network (DN).

The terminal, RAN, and CN are the main components of the architecture. Logically, they may be divided into two parts: the user plane and the control plane. The control plane is responsible for the management of the mobile network, and the user plane is responsible for the transmission of service data.

Terminal: it is the entrance for mobile users to interact with the network. It can provide basic computing power and storage capacity, display service windows to users, and receive user operation input. The terminal may adopt the next-generation air interface technology to establish a signal connection and data connection with the RAN, so as to transmit control signals and service data to the mobile network.

RAN: similar to the base station in the traditional network, it is deployed close to the terminal, provides network access functions for authorized users in the coverage area of the cell, and can use transmission tunnels of different qualities to transmit user data according to user levels, service requirements, etc. RAN can manage its own resources, use them reasonably, provide access services for terminals on demand, and forward control signals and user data between terminals and the core network.

CN: it is responsible for maintaining the subscription data of the mobile network, managing network elements of the mobile network, and providing functions such as session management, mobility management, policy management, and security authentication for terminals. When the terminal is attached, it provides network access authentication for the terminal; when the terminal has a service request, it allocates network resources for the terminal; when the terminal moves, it updates the network resources for the terminal; when the terminal is idle, it provides a quick recovery mechanism for the terminal; when the terminal is deattached, it releases network resources for the terminal; when the terminal has service data, it provides data routing functions for the terminal, such as forwarding the uplink data to the DN; or receiving downlink data of the terminal from the DN, forwarding it to the RAN, and then sending it to the terminal. The CN includes one or more network elements. Optionally, the CN includes at least a Network Data Analysis Function (NWDAF).

DN: It is a data network that provides business services for users. Generally, the client is located in the terminal, and the application server is located in the data network. The data network may be a private network, such as a local area network, or an external network not controlled by the operator, such as the Internet, or a proprietary network jointly deployed by the operator, such as for configuring the Internet Protocol (IP), IP Multimedia Core Network Subsystem (IMS) service.

FIG. 2 shows a flowchart of a method for sending early warning information provided by an exemplary embodiment of the present application. The embodiment of the present application is illustrated by applying the above method to the early warning system shown in FIG. 1. The early warning system includes a first network element, a terminal and an application server. The method is applied to the first network element. The method for sending early warning information provided in the embodiment of the present application includes the following steps.

In **step 202:** a subscription request for early warning information is received from a subscriber.

Optionally, the subscriber may include at least one of a terminal or an application server, and the subscribed party may include at least one of a terminal, a mobile communication network, or an application server.

Schematically, the subscription request includes request information related to early warning information. Specifically, the request information in the subscription request includes at least one of the following information.
- An identifier or group identifier of the subscribed party.

Taking the subscribed party being a terminal as an example, the identifier refers to an identification used to identify the terminal during data exchange, and the group identifier is used to identify the group where the terminal is located. For example, the terminal identifier is an International Mobile Equipment Identity (IMEI).
- Data flow information of the subscribed party.

The data flow information includes at least one of the following information: Protocol Data Unit (PDU) session information, radio bearer information, Quality Of Service (QOS) parameter information. Taking the subscribed party being a terminal as an example, the data flow information of the terminal includes at least one of an IP quintuple or an application identifier, and the IP quintuple includes a source IP address, a source port, a destination IP address, a destination port, and a transport layer protocol.
- Early warning threshold.

The early warning threshold is used for indicating a threshold for sending the early warning information.
- The value range of early warning advance amount.

The early warning advance amount is used for indicating a threshold that triggers the generation of early warning information, or a threshold that triggers the sending of early warning information. The value range of the early warning advance amount can be determined according to actual needs, and the smaller the value range, the higher the accuracy of the early warning.
- Whether to inform the estimated parameter value.

The estimated parameter value is an estimated value obtained by predicting according to the target parameter of the subscribed party.

In **step 204:** a target parameter of the subscribed party is monitored according to the subscription request.

The target parameter is used for determining the early warning information, and specifically refers to relevant information used by the subscriber to realize the communication function. Schematically, the target parameter includes, but is not limited to, at least one of the following information.
- The QOS parameter of the subscribed party.

The QOS parameter is used for indicating information related to the quality of network service. The quality of network service means that the mobile communication network needs to satisfy a series of service requests when transmitting data streams. In different PDU sessions, the network communication provides differentiated QOS guarantees according to different service data streams transmitted. Specifically, the QOS parameter includes, but is not limited to, at least one of the following information: a Guaranteed Bit Rate (GBR), a packet loss rate and a time delay. Among them, GBR refers to the minimum bit rate guaranteed to be carried by the system; the packet loss rate refers to a ratio of the data loss part to the total number of transmitted data during data transmission, and the packet loss rate usually needs to be controlled within a certain range; the time delay refers to a time required for the data (one message, packet or bit) to be transmitted from one end to the other end of the network (or link), also known as delay or postpone, which includes a sending delay, a propagation delay, a processing delay, a queuing delay and many other types.
- The distance between the subscribed party and the designated area range.

The distance between the subscribed party and the designated area range refers to one of a straight-line distance, a shortest distance, and an actual travel distance from the terminal to the center or edge of the designated area range. Among them, the designated area range may be one Area Of Interest, which is used to identify an area-like geographic entity in the map. For example, the designated area range is a residential area, or a university.
- The degree of network congestion between the subscribed party and the first network element.

The degree of network congestion between the subscribed party and the first network element refers to the congestion information of the network communication between the subscribed party and the first network element under a certain limiting factor. Specifically, the network congestion refers to a situation in which the network transmission performance decreases due to limited resources of the store-and-forward node when the number of packets transmitted in a packet-switching network is too large, which is a network state of continuous overload. At different times and in different regions, the degree of network congestion between the subscribed party and the first network element is different.
- The power information of the subscribed party.
- The computing power information of the subscribed party.

In step 204, real-time monitoring, or intermittent monitoring, or non-real-time continuous monitoring is performed on the target parameter of the terminal. Specifically, the target parameter of the terminal is monitored by monitoring at least one of the terminal, the first network element, the second network element, or the application server, where the first network element and the second network element are different network elements. For example, the first network element acquires the distance information between the terminal and the designated area range by monitoring the terminal in real time.

In **step 206:** the early warning information is sent based on the monitoring result of the target parameter.

Schematically, the early warning information is determined according to the target parameter, and optionally, the early warning information may also be called a monitoring event.

According to the aforementioned content, the monitoring result of the target parameter can be obtained by monitoring the subscribed party, and the result includes at least one of the QOS parameter of the subscribed party, the distance between the subscribed party and a designated area range, the degree of network congestion between the subscribed party and the first network element, the power information of the subscribed party, or the computing power information of the subscribed party. Based on the above monitoring result, the first network element generates or acquires the early warning information, and then sends it to the subscriber.

Schematically, the early warning information includes but is not limited to at least one of the following information:
- Estimated time length of triggering the early warning threshold.

The estimated time length of triggering the early warning threshold refers to the time difference between the current moment and the moment when the target parameter reaches the predetermined threshold.
- Confidence level of early warning information.

The confidence level of the early warning information refers to the reliability of the sent early warning information, and the calculation of the confidence level can be obtained through statistics and/or analysis of historical data.
- The QOS parameter of the subscribed party.
- Location information of the subscribed party.
- The degree of network congestion of the subscriber and the first network element.

Specifically, the early warning information includes at least one of the target parameter and the predicted target parameter of the terminal. The predicted target parameter refers to the estimated amount after change calculated according to the target parameter of the subscribed party at the current moment.

For example, the first network element acquires the GBR of the terminal at the current moment through real-time monitoring. According to the location information of the terminal, the value of the estimated GBR of the terminal after 20 seconds can be calculated, and the value will reach the threshold of the early warning threshold, that is, the estimated time length to trigger the early warning threshold is 20 seconds. Subsequently, the first network element sends the value of the estimated GBR and the estimated time length of triggering the early warning threshold to the subscriber.

Optionally, the early warning information may also be called prediction information (prediction), which is used for indicating prediction parameter information within or after a preset time length. The preset time length may be set according to actual needs. For example, the preset time length is 30 seconds, and the early warning information is used for indicating the change information of the QOS parameter of the subscribed party within 30 seconds.

Specifically, according to the different sending channels of the early warning information, step 206 can be implemented as one of the following steps:
based on the monitoring result of the target parameter, sending early warning information to the terminal through a Non-Access Stratum (NAS) message;
or, based on the monitoring result of the target parameter, sending early warning information to the terminal or application server through a User Plane Function (UPF);
or, based on the monitoring result of the target parameter, sending early warning information to the terminal or application server through a Network Exposure Function (NEF).

To sum up, in the method for sending early warning information provided by the embodiment of the present application, the first network element monitors the target parameter of the subscribed party by receiving the subscriber's subscription request for early warning information, and sends the early warning information based on the monitoring result of the target parameter, which enables the subscriber to acquire the corresponding early warning information. That is, the first network element sends the early warning information according to the subscription request, so that the terminal and the application server can acquire the early warning information corresponding to the subscription request, realizing the information interaction among the terminal, the first network element and the application server, and avoiding idle network resources.

FIG. 3 shows a flowchart of a method for sending early warning information provided by another exemplary embodiment of the present application. The embodiment of the present application is illustrated by applying the above method to the early warning system shown in FIG. 1. The above early warning system includes a first network element, a terminal and an application server. The method is applied to the first network element. The method for sending early warning information provided in the embodiment of the present application includes the following steps.

In **step 302:** a subscription request for early warning information from a subscriber is received.

Optionally, the subscriber may include at least one of a terminal or an application server, and the subscribed party may include at least one of a terminal, a mobile communication network, or an application server.

Schematically, the subscription request includes request information related to early warning information. Specifically, the request information in the subscription request includes at least one of the following information: an identifier or group identifier of the subscribed party; data flow information of the subscribed party; an early warning threshold; a value range of an early warning advance amount; or whether to notify an estimated parameter value.

Step 302 is the same as step 202, which can be used as a reference and will not be repeated here.

In addition, referring to the receiving method of the subscription request, there are also a plurality of optional receiving methods for the subscription request. Schematically, step 302 may be implemented as at least one of the following steps:
receiving the request information of the subscription request through the non-access stratum (NAS) message;
or, receiving request information through UPF;
or, receiving request information through NEF.

In **step 304:** according to the subscription request, whether the target parameter of the subscribed party triggers the early warning threshold is monitored.

The target parameter is used for determining the early warning information, which specifically refers to the relevant information used by the subscriber to realize the communication function, and the early warning threshold is used for indicating the threshold for sending the early warning information.

According to the foregoing content, the target parameter includes but is not limited to at least one of the following information: the QOS parameter of the subscribed party, the distance between the subscribed party and the designated area range, the degree of network congestion between the subscribed party and the first network element, the power information of the subscribed party or the computing power information of the subscribed party.

Real-time monitoring, or intermittent monitoring, or non-real-time continuous monitoring is performed on the target parameter of the subscribed party. Specifically, it is realized by monitoring at least one of the terminal, the first network element, the second network element or the application server, where the first network element and the second network element are different network elements.

According to the foregoing content, the early warning information includes but is not limited to at least one of the following information: the estimated time length of triggering the early warning threshold, the confidence level of the early warning information, the QOS parameter of the subscribed party, the location information of the subscribed party, the degree of network congestion of the subscribed party and the first network element.

According to the different target parameters, the setting of the early warning threshold is also different. Schematically, step 302 may be implemented as at least one of the following steps:
monitoring whether the QOS parameter of the subscribed party reaches a first early warning threshold;
monitoring whether the distance between the subscribed party and the designated area range reaches a second early warning threshold;
monitoring whether the degree of network congestion between the subscribed party and the first network element reaches a third early warning threshold;
monitoring whether the power information of the subscribed party reaches a fourth early warning threshold;
monitoring whether the computing power information of the subscribed party reaches a fifth early warning threshold.

The thresholds of the first early warning threshold, the second early warning threshold, the third early warning threshold, the fourth early warning threshold and the fifth early warning threshold can be adjusted according to actual needs.

Specifically, in the actual setting of the early warning threshold, if the threshold is a value, whether it is reached means that the target parameter of the subscribed party is not less than the threshold; if the threshold is a value range, whether it is reached means that the target parameter of the subscribed party is within the value range.

For example, the threshold of the second early warning threshold is set to 100 meters, and the first network element monitors in real time whether the distance between the terminal and the designated area range is greater than or equal to 100 meters; for another example, the fourth early warning threshold is 20% to 40%, the first network element monitors in real time whether the power information of the terminal is within this range.

According to the foregoing content, the QOS parameter includes but is not limited to at least one of the following information: a GBR, a packet loss rate or a time delay. Based on this, the step of monitoring in real time whether the QOS parameter of the subscribed party reaches the first early warning threshold may be implemented as at least one of the following steps:
monitoring whether the GBR of the subscribed party reaches a first threshold;
or, monitoring whether the packet loss rate of the subscribed party reaches a second threshold;
or, monitoring whether the time delay of the subscribed party reaches a third threshold.

The first threshold, the second threshold and the third threshold can be adjusted according to actual needs. For example, the first threshold is set to 30Mbps.

After the target parameter of the terminal triggers the early warning threshold, there are two optional execution steps as follows. One of step 3061 and step 3062 is executed, and they cannot be executed at the same time.

In **step 3061:** in the case that the target parameter of the subscribed party triggers the early warning threshold, the early warning information is sent based on the monitoring result of the target parameter.

In **step 3062:** in the case that the target parameter of the subscribed party triggers the early warning threshold and the trigger duration reaches a preset time length, the early warning information is sent based on the monitoring result of the target parameter.

Optionally, the early warning information is used by the subscriber to adjust a behavior of the application layer.

Specifically, the adjustment of the behavior of the application layer includes at least one of the following:
- division of an Artificial Intelligence (AI) model;
- download of the AI model;
- deletion of the AI model;
- change of model information of the AI model.

The division of the AI model includes the change of the model split point; the model information of the AI model includes at least one of parameter information or structure information.

According to the foregoing content, the monitoring of the subscribed party can acquire the monitoring result of the target parameter, and the result includes at least one of the QOS parameter of the subscribed party, the distance between the subscribed party and the designated area range, the degree of network congestion between the subscribed party and the first network element, the power information of the subscribed party, or the computing power information of the subscribed party. Based on the above monitoring result, the first network element acquires the early warning information, and sends it to the subscriber when the target parameter triggers the early warning threshold, or when the target parameter triggers the early warning threshold and the triggering duration reaches the preset time length. The preset time length can be set according to actual needs. For example, the preset time length is 5 seconds.

For example, the first network element acquires through real-time monitoring that the GBR of the terminal at the current moment is 35 Mbps, and the threshold of the early warning threshold is 30 Mbps. Since the GBR of the terminal has reached the threshold of the early warning threshold, that is, the target parameter of the terminal can trigger the early warning threshold, the first network element sends the early warning information to the subscriber, and the early warning information includes the value of the GBR.

Alternatively, the first network element acquires through real-time monitoring that the GBR of the terminal at the current moment is 35 Mbps, and the GBR of the terminal remains at this value for 7 seconds, the threshold of the early warning threshold is 30 Mbps, and the preset time length for triggering the early warning threshold is 5 second. Since the GBR of the terminal has reached the threshold of the early warning threshold and the duration of the trigger reaches the preset time length, that is, the target parameter of the terminal can trigger the early warning threshold and the duration of the trigger reaches the preset time length, the first network element sends the early warning information to the subscriber.

Subsequently, the subscriber receives the early warning information sent by the first network element, and changes the split point of the AI model from the first split point to the second split point based on the above information. The first split point and the second split point are different split points.

To sum up, in the method for sending early warning information provided by the embodiment of the present application, the first network element monitors the target parameter of the subscribed party by receiving the subscriber's subscription request for early warning information, and when the target parameter triggers the early warning threshold, or when the target parameter triggers the early warning threshold and the triggering duration reaches the preset time length, the early warning information is sent.

FIG. 4 shows a flowchart of a method for sending early warning information provided by another exemplary embodiment of the present application. The embodiment of the present application is illustrated by applying the above method to the early warning system shown in FIG. 1. The above early warning system includes a first network element, a terminal and an application server. The method is applied to the first network element. The method for sending early warning information provided in the embodiment of the present application includes the following steps.

In **step 402:** a target parameter of the subscribed party is acquired in real time from the terminal and/or a second network element.

The second network element and the first network element are different network elements.

According to the foregoing content, the target parameter of the subscribed party includes but is not limited to at least one of the following information: the QOS parameter of the subscribed party, the distance between the subscribed party and the designated area range, and the degree of network congestion between the subscribed party and the first network element, the power information of the subscribed party, or the computing power information of the subscribed party.

According to different contents of the target parameter, there are a plurality of optional implementation manners for step 402. Schematically, step 402 may be implemented as at least one of the following steps:
acquiring the QOS parameter of the terminal from the terminal;
acquiring the distance between the terminal and the designated area range from the second network element;
acquiring the estimated power information of the subscribed party from the subscribed party;
acquiring the estimated computing power information of the subscribed party from the subscribed party;
acquiring mobility prediction information of the terminal from the second network element;
where the mobility prediction information of the terminal refers to parameter information related to the movement of the terminal, the mobility prediction information of the terminal includes but is not limited to at least one of the following information: a moving speed, a moving direction, a moving duration, an estimated moving direction, an estimated moving duration, an estimated moving distance;
acquiring the degree of network congestion of the subscribed party and the first network element from the second network element.

In **step 404:** the subscription request of the subscriber for the early warning information is received.

Optionally, the subscriber may include at least one of a terminal or an application server, and the subscribed party may include at least one of a terminal, a mobile communication network, or an application server.

Schematically, the subscription request includes request information related to early warning information. Specifically, the request information in the subscription request includes at least one of the following information: an identifier or group identifier of the subscribed party; data flow information of the subscribed party; an early warning threshold; a value range of an early warning advance amount; whether to notify an estimated parameter value.

Step 404 is the same as step 302, which can be used as a reference and will not be repeated here.

In **step 406:** according to the subscription request, a predicted target parameter of the subscribed party is calculated based on the monitoring result of the target parameter, or the predicted target parameter of the subscribed party is acquired.

The predicted target parameter refers to the changed estimated quantity calculated according to the target parameter of the subscribed party at the current moment. For example, the first network element acquires the value of the GBR of the terminal at the current moment through real-time monitoring, and based on the value, the value of the predicted GBR can be obtained.

Specifically, the predicted target parameter is obtained through calculation by at least one of the terminal, the first network element, or the second network element. For example, the predicted target parameter is calculated by the first network element, and the first network element sends the predicted target parameter to the subscriber; for another example, the predicted target parameter is calculated by the terminal or the second network element, and the terminal or the second network element sends the predicted target parameter to the first network element, and the first network element acquires the corresponding predicted target parameter.

According to different target parameters, the predicted target parameter includes but is not limited to at least one of the following information: the predicted QOS parameter of the subscribed party, the predicted distance between the subscribed party and the designated area range, the predicted degree of network congestion between the subscribed party and the first network element, the predicted power information of the subscribed party, or the predicted computing power information of the subscribed party.

In **step 408:** it is monitored whether the predicted target parameter of the terminal triggers the early warning threshold.

The early warning threshold is used for indicating a threshold for sending early warning information.

Real-time monitoring, or intermittent monitoring, or non-real-time continuous monitoring is performed on the predicted target parameter of the subscribed party. Specifically, it is realized by monitoring at least one of the terminal, the first network element, the second network element or the application server, where the first network element and the second network element are different network elements.

According to the different predicted target parameters, the setting of early warning threshold is also different. Schematically, step 402 may be implemented as at least one of the following steps:
monitoring whether the predicted QOS parameter of the subscribed party reaches the first early warning threshold;
monitoring whether the predicted distance between the subscribed party and the designated area range reaches the second early warning threshold;
monitoring whether the predicted degree of network congestion between the subscribed party and the first network element reaches the third early warning threshold;
monitoring whether the predicted power information of the subscribed party reaches the fourth early warning threshold;
monitoring whether the predicted computing power information of the subscribed party reaches the fifth early warning threshold.

The thresholds of the first early warning threshold, the second early warning threshold, the third early warning threshold, the fourth early warning threshold and the fifth early warning threshold can be adjusted according to actual needs.

Specifically, in the actual setting of the early warning threshold, if the threshold is a numerical value, whether it is reached means that the predicted target parameter of the subscribed party is not less than the threshold; if the threshold is a value range, whether it is reached means that the predicted target parameter of the subscribed party is within the value range.

For example, the threshold of the second early warning threshold is set to 100 meters, and the first network element monitors in real time whether the predicted distance between the terminal and the designated area range is greater than or equal to 100 meters; for another example, the fourth early warning threshold is 20% to 40%, the first network element monitors in real time whether the predicted power information of the terminal is within the range.

Similar to the foregoing content, the predicted QOS parameter includes but is not limited to at least one of the following information: a predicted GBR, a predicted packet loss rate, or a predicted time delay. Based on this, monitoring whether the predicted QOS parameter of the subscribed party reaches the first early warning threshold can be implemented as at least one of the following steps:
monitoring whether the predicted GBR of the subscribed party reaches the first threshold;
or, monitoring whether the predicted packet loss rate of the subscribed party reaches the second threshold;
or, monitoring whether the predicted time delay of the subscribed party reaches the third threshold.

The first threshold, the second threshold and the third threshold can be adjusted according to actual needs. For example, the first threshold is set to 30Mbps.

In **step 410:** In the case that the predicted target parameter of the subscribed party triggers the early warning threshold, the early warning information is sent.

Schematically, the early warning information includes an early warning advance amount, which is an estimated time value required for the target parameter to change to the predicted target parameter.

According to the foregoing content, the monitoring of the subscribed party can acquire the monitoring result of the target parameter, and the result includes at least one of the QOS parameter of the subscribed party, the distance between the subscribed party and the designated area range, the degree of network congestion between the subscribed party and the first network element, the power information of the subscribed party, or the computing power information of the subscribed party. Based on the above monitoring result, the predicted target parameter can be obtained. The predicted target parameter includes but is not limited to at least one of the following information: the predicted QOS parameter of the subscribed party, the predicted distance between the subscribed party and the designated area range, the predicted degree of network congestion between the subscribed party and the first network element, the predicted power information of the subscribed party, or the predicted computing power information of the subscribed party.

The early warning advance amount refers to the estimated time length of changing from the target parameter to the predicted target parameter. For example, the first network element acquires the GBR of the terminal at the current moment through real-time monitoring, and the first network element calculates and obtains that the terminal reaches the estimated GBR after 10 seconds, then the early warning advance amount is 10 seconds.

To sum up, in the method for sending early warning information provided by the embodiment of the present application, the first network element monitors the target parameter of the subscribed party by receiving the subscriber's subscription request for early warning information, and calculates or acquires the predicted target parameter of the subscribed party according to the monitoring result, and when the predicted target parameter triggers the early warning threshold, the first network element sends early warning information, and according to the early warning advance amount included in the early warning information, the subscriber can acquire the corresponding early warning information according to the subscription request.

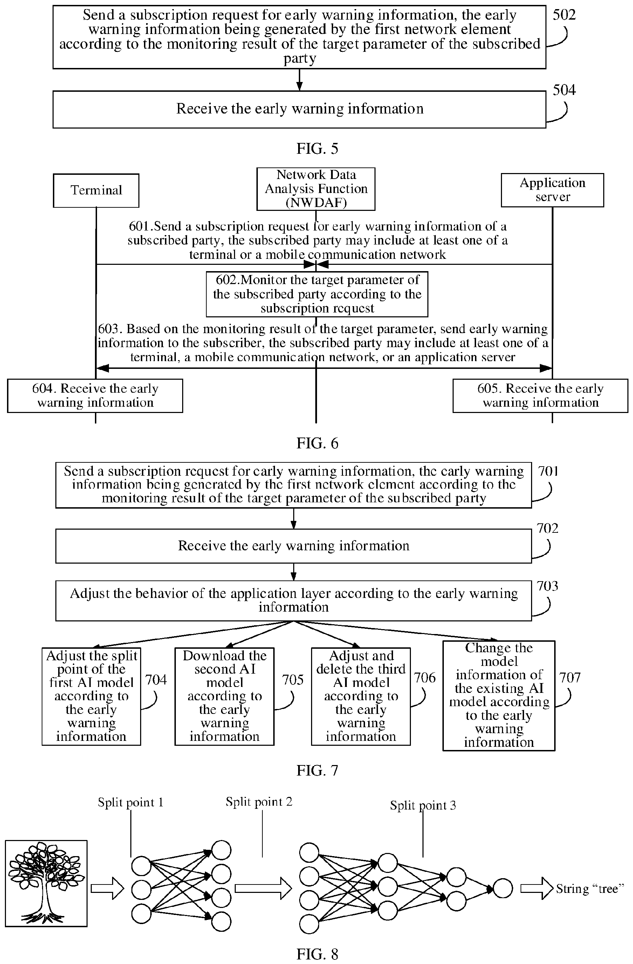

FIG. 5 shows a flowchart of a method for receiving early warning information provided by an exemplary embodiment of the present application. The embodiment of the present application is illustrated by applying the above method to the early warning system shown in FIG. 1. The above early warning system includes a first network element, a terminal and an application server. The method is applied to a subscriber, where the subscriber may include at least one of a terminal or an application server. The method for receiving early warning information provided in the embodiment of the present application includes the following steps.

In **step 502:** a subscription request for early warning information is sent.

Schematically, the early warning information is generated by the first network element according to the monitoring result of the target parameter of the subscribed party. Optionally, the subscribed party may include at least one of a terminal, a mobile communication network, or an application server.

Specifically, the request information in the subscription request includes at least one of the following information: the identifier or group identifier of the subscribed party; the data flow information of the subscribed party; the early warning threshold; the value range of the early warning advance amount; whether to notify the estimated parameter value.

Specifically, there are many ways to implement the sending of the subscription request, and step 502 can be implemented as at least one of the following steps:
sending the request information of the subscription request through the NAS message;
or, sending the request information through UPF;
or, sending the request information through NEF.

In **step 504:** early warning information is received.

Schematically, the early warning information is generated by the first network element according to the monitoring result of the target parameter of the subscribed party.

According to the foregoing content, the target parameter of the subscribed party includes but is not limited to at least one of the following information: the QOS parameter of the subscribed party, the distance between the subscribed party and the designated area range, the degree of network congestion between the subscribed party and the first network element, the power information of the subscribed party, or the computing power information of the subscribed party.

The early warning information includes but is not limited to at least one of the following information: the estimated time length of triggering the early warning threshold, the confidence level of the early warning information, the QOS parameter of the subscribed party, the location information of the subscribed party, the degree of network congestion between the subscribed party and the first network element.

In addition, according to the aforementioned content, there are many ways to realize the sending of early warning information. Corresponding, there are also many ways for receiving the early warning information, and step 504 can be implemented as at least one of the following steps:
receiving the early warning information through NAS message;
or, receiving the early warning information through UPF;
or, receiving the early warning information through NEF.

FIG. 6 shows a flowchart of a method for sending and receiving early warning information provided by an exemplary embodiment of the present application. The subscriber may include at least one of a terminal or an application server, and the subscribed party may include at least one of a terminal, a mobile communication network, or an application server. Taking the first network element being NWDAF as an example, the method includes the following steps.

In **step 601:** the terminal and the application server send a subscription request for early warning information to NWDAF.

Schematically, the subscription request includes request information related to early warning information.

Specifically, the request information in the subscription request includes at least one of the following information: the identifier or group identifier of the subscribed party; the data flow information of the subscribed party; the early warning threshold; the value range of the early warning advance amount; whether to notify the estimated parameter value.

In **step 602:** NWDAF monitors the target parameter of the subscribed party according to the subscription request.

The target parameter is used for determining the early warning information.

Schematically, the target parameter of the subscribed party includes but is not limited to at least one of the following information: the QOS parameter of the subscribed party, the distance between the subscribed party and the designated area range, the degree of network congestion between the subscribed party and NWDAF, the power information of the subscribed party, the computing power information of the subscribed party.

In **step 603:** based on the monitoring result of the target parameter, the NWDAF sends early warning information to the subscriber.

The subscriber may include a terminal and an application server.

Schematically, the early warning information is used by the subscriber to adjust a behavior of the application layer.

The early warning information includes but is not limited to at least one of the following information: the estimated time length of triggering the early warning threshold, the confidence level of the early warning information, the QOS parameter of the subscribed party, the location information of the subscribed party, the degree of network congestion between the subscribed party and the NWDAF.

Specifically, in step 603, the NWDAF may send early warning information to at least one of the terminal or the application server. Based on the early warning information sent by the NWDAF, the terminal executes step 604, and the application server executes step 605. If one of the terminal and the application server does not receive the early warning information sent by the NWDAF, the terminal and the application server do not perform corresponding steps.

In **step 604:** the terminal receives the early warning information.

In **step 605:** the application server receives the early warning information.

According to the foregoing content, there are many ways to send and receive early warning information, including but not limited to at least one of the following ways: receiving and/or sending early warning information through NAS message; or receiving and/or sending early warning information through UPF; or receiving and/or sending early warning information through NEF.

Schematically, step 604 and step 605 may be performed alternatively, may be performed at the same time, or may not be performed at the same time, which is not limited here.

To sum up, in the method for receiving early warning information provided by the embodiment of the present application, the first network element monitors the target parameter of the subscribed party by receiving the subscriber's subscription request for early warning information, and sends the early warning information based on the monitoring result of the target parameter, which enables the subscriber to acquire the corresponding early warning information. That is, the first network element sends the early warning information according to the subscription request, so that the terminal and the application server can acquire the early warning information corresponding to the subscription request, realizing the information interaction among the terminal, the first network element and the application server, and avoiding idle network resources.

FIG. 7 shows a flowchart of a method for receiving early warning information provided by an exemplary embodiment of the present application. The embodiment of the present application is illustrated by applying the above method to the early warning system shown in FIG. 1. The above early warning system includes the first network element, the terminal and the application server. The method is applied to a subscriber, the subscriber may include at least one of a terminal or an application server, and the subscribed party may include at least one of a terminal, a mobile communication network, or an application server. The method for receiving early warning information provided in the embodiment of the present application includes the following steps.

In **step 701:** a subscription request for early warning information is sent.

In order to receive the early warning information, the subscriber needs to send a subscription request to the first network element, and the subscription request includes request information related to the early warning information.

According to the above content, the request information in the subscription request includes at least one of the following information: the identifier or group identifier of the subscribed party; the data flow information of the subscribed party; the early warning threshold; the value range of the early warning advance amount; whether to inform the estimated parameter value.

Specifically, there are many ways to implement the sending of the subscription request. Schematically, step 702 may be implemented as at least one of the following steps:
sending the request information of the subscription request through the NAS message;
or, sending the request information through UPF;
or, sending the request information through NEF.

In **step 702:** the early warning information is received.

Schematically, the early warning information is generated by the first network element according to the monitoring result of the target parameter of the subscribed party.

According to the foregoing content, the target parameter of the subscribed party includes but is not limited to at least one of the following information: the QOS parameter of the subscribed party, the distance between the subscribed party and the designated area range, the degree of network congestion between the subscribed party and the first network element, the power information of the subscribed party, the computing power information of the subscribed party.

The early warning information includes but is not limited to at least one of the following information: the estimated time length of triggering the early warning threshold, the confidence level of the early warning information, the QOS parameter of the subscribed party, the location information of the subscribed party, the degree of network congestion between the subscribed party and the first network element.

Schematically, step 702 is the same as step 504, which can be used as a reference and will not be repeated here.

In **step 703:** the behavior of the application layer is adjusted according to the early warning information.

Schematically, the early warning information is used by the subscriber to adjust the behavior of the application layer. Specifically, the adjustment of the behavior of the application layer includes at least one of the following: dividing the AI model, downloading the AI model, deleting the AI model, and changing model information of the AI model.

The division of the AI model includes the change of the model split point; the model information of the AI model includes at least one of parameter information or structure information.

For example, the terminal and the application server receive the early warning information, and the early warning information includes the distance between the terminal and the designated area range. According to the early warning information, the application server invokes and establishes a dedicated bearer service, and sends model information of the AI model to the terminal, and the model information includes parameter information and structure information of this AI model.

Specifically, step 703 can be implemented as follows: when the early warning information indicates that the target parameter or predicted target parameter of the subscribed party triggers the early warning threshold, adjusting the behavior of the application layer. The predicted target parameter is determined according to the target parameter.

According to the foregoing content, the target parameter or predicted target parameter of the subscribed party triggering the early warning threshold includes but is not limited to at least one of the following situations:
the QOS parameter or predicted QOS parameter of the subscribed party reaches the first early warning threshold;
the distance or predicted distance between the subscribed party and the designated area range reaches the second early warning threshold;
the degree of network congestion or the predicted degree of network congestion between the subscribed party and the first network element reaches the third early warning threshold;
the power information or predicted power information of the subscribed party reaches the fourth early warning threshold;
the computing power information or predicted computing power information of the subscribed party reaches the fifth early warning threshold.

According to different QOS parameters, the QOS parameter or predicted QOS parameter of the subscribed party reaching the first early warning threshold further includes at least one of the following three situations:
the GBR or predicted GBR of the subscribed party reaches the first threshold;
or, it is monitored that the packet loss rate or predicted packet loss rate of the subscribed party reaches the second threshold;
or, it is monitored that the packet loss rate or predicted time delay of the subscribed party reaches the third threshold.

According to the foregoing content, after receiving the early warning information, the subscriber may adjust the behavior of the application layer in a variety of optional ways.

For example, in the case that the early warning information indicates that the GBR of the terminal reaches the first threshold, the split point of the first AI model is adjusted. For another example, in the case that the early warning information indicates that the distance between the terminal and the designated area range reaches the second early warning threshold, the second AI model is downloaded. For another example, in the case that the degree of network congestion between the application server and the first network element reaches the third early warning threshold, the third AI model is deleted. For another example, in the case that the power information of the terminal reaches the fourth early warning threshold, the model information of the existing AI model is changed.

Based on this, step 703 has the following four optional implementation manners. One of step 704, step 705, step 706, and step 707 may be executed, these steps may be executed at the same time, or may not be executed at the same time, which is not limited here.

In **step 704:** the split point of the first AI model is adjusted according to the early warning information.

The changing the split point of the AI model is an adjustment way related to the division of the AI model.

The target parameter of the subscribed party includes but not limited to at least one of the following information: the QOS parameter of the subscribed party, the distance between the subscribed party and the designated area range, the degree of network congestion between the subscribed party and the first network element, the power information of the subscribed party, the computing power information of the subscribed party. The predicted target parameter includes but is not limited to at least one of the following information: the predicted QOS parameter of the subscribed party, the predicted distance between the subscribed party and the designated area range, the predicted degree of network congestion between the subscribed party and the first network element, the predicted power information of the subscribed party, the predicted computing power information of the subscribed party.

According to different target parameters or predicted target parameters, the setting of the early warning threshold is also different. For details, the foregoing content may be referred to. For example, in the case that the target parameter triggers the early warning threshold, the split point of the first AI model is adjusted, where the target parameter is the GBR of the terminal, and the early warning threshold is 20 Mbps.

Schematically, the step of adjusting the split point of the first AI model can be implemented as: changing the split point of the first AI model from the first split point to the second split point, and the first split point and the second split point are different split points.

As schematically shown in FIG. 8, for example, the processing of the first AI model is handled by the terminal and the application server respectively, the uplink GBRs required for data transmission at the three split points are different, and the specific required uplink GBRs are shown in the table below.

| Split point | Required minimum uplink GBR/Mbps |
|---|---|
| Split point 1 | 36 |
| Split point 2 | 20 |
| Split point 3 | 10 |

That is, in the case that the uplink GBR reaches more than 36Mbps, the terminal and the application server select split point 1; in the case that the uplink GBR is between 36Mbps and 20Mbps, the terminal and the application server select split point 2; in the case that the uplink GBR is between 20Mbps and 10Mbps, the terminal and application server select split point 3.

Taking the first network element being NWDAF as an example, the split point currently used by the terminal and the application server is split point 2.

NWDAF sends early warning information to the terminal and the application server. The early warning information includes the uplink GBR of the terminal, and the uplink GBR is 15Mbps. Since the uplink GBR at the current moment is between 20Mbps and 10Mbps, the terminal and the application server change the split point from split point 1 to split point 3. It is equivalent to that the early warning threshold is 20Mbps to 10Mbps. Since the target parameter of the terminal can trigger the early warning threshold, the terminal and the application server change the split point according to the early warning information sent by NWDAF.

In **step 705:** the second AI model is downloaded according to the early warning information.

The target parameter of the subscribed party includes but is not limited to at least one of the following information: the QOS parameter of the subscribed party, the distance between the subscribed party and the designated area range, the degree of network congestion between the subscribed party and the first network element, the power information of the subscribed party, the computing power information of the subscribed party. The predicted target parameter includes but is not limited to at least one of the following information: the predicted QOS parameter of the subscribed party, the predicted distance between the subscribed party and the designated area range, the predicted degree of network congestion between the subscribed party and the first network element, the predicted power information of the subscribed party, the predicted computing power information of the subscribed party.

According to different target parameters or predicted target parameters, the setting of the early warning threshold is also different. For details, the foregoing content is referred to. For example, when the predicted target parameter triggers the early warning threshold, the second AI model is downloaded, where the target parameter of the terminal is the predicted distance between the terminal and the designated area range, and the early warning threshold is 500 meters.

Schematically, the step of downloading the second AI model may be implemented as: downloading model information of the second AI model, where the model information includes at least one of parameter information or structure information.

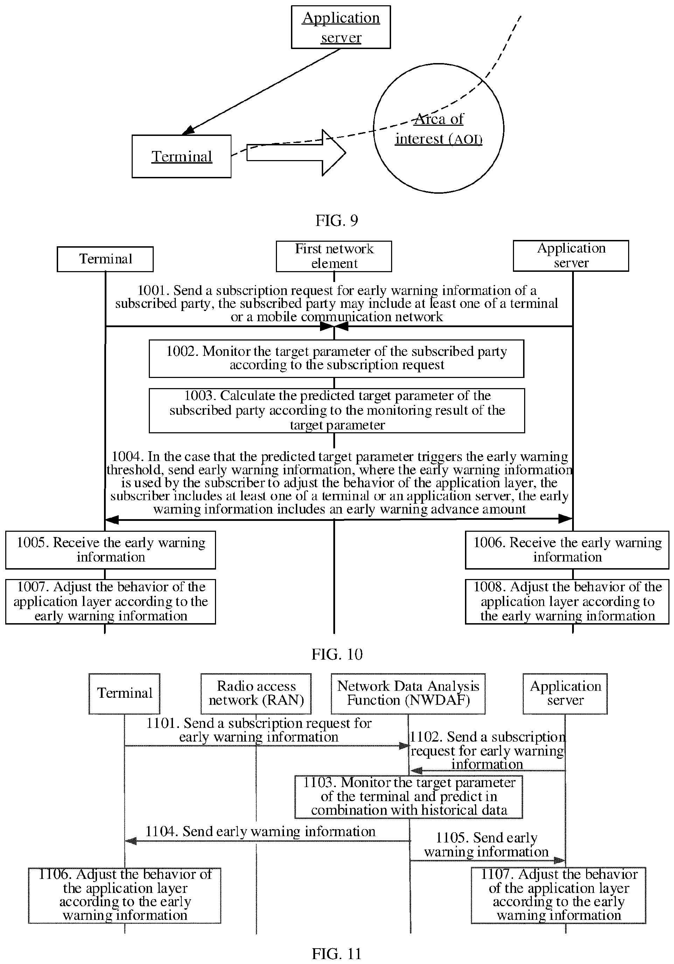

As schematically shown in FIG. 9, taking the terminal being an intelligent driving vehicle and the first network element being an NWDAF as an example, the designated area range is an area of interest (AOI, i.e., the circular area shown in the figure). For example, AOI is where a residential area is located. The arrow points to the traveling direction of the intelligent driving vehicle, and the terminal and the application server have a communication connection.

The intelligent driving vehicle sends a subscription request for early warning information to NWDAF, and the request information of the subscription request includes the terminal identifier, the early warning threshold and the value range of the early warning advance amount of the intelligent driving vehicle. NWDAF monitors the target parameter of the intelligent driving vehicle in real time, and acquires the current distance with respect to AOI, direction and movement speed of the intelligent driving vehicle. Based on this, NWDAF obtains the predicted travel route of the intelligent driving vehicle (that is, the dotted line shown in the figure), and obtains by calculation that the distance between the intelligent driving vehicle and the AOI after 1 minute is 100 meters.

Subsequently, NWDAF sends early warning information to the intelligent driving vehicle and the application server. The early warning information includes that the current distance between the intelligent driving vehicle and the AOI is 600 meters, and the distance between the intelligent driving vehicle and the AOI is expected to be 100 meters after 1 minute. That is, NWDAF sends early warning information to the intelligent driving vehicle and the application server, to indicate that the intelligent driving vehicle will enter the AOI area after 1 minute. Among them, 600 meters is equivalent to the target parameter of the intelligent driving vehicle, 100 meters is equivalent to the predicted target parameter of the intelligent driving vehicle, and 1 minute is equivalent to the early warning advance amount.

Based on this, the application server invokes and establishes a dedicated bearer service, and sends the model information of the AI model to the intelligent driving vehicle in advance. The model information includes the parameter information and structure information of the second AI model; the intelligent driving vehicle downloads the model information of the second AI model, to realize the automatic driving of the intelligent driving vehicle in the AOI area.

In **step 706:** the third AI model is deleted according to the early warning information.

Specifically, the third AI model may be a currently used or historically used model.

As schematically shown in FIG. 9, the intelligent driving vehicle can download the second AI model according to the early warning information, and delete the third AI model at the same time, the third AI model being the model used by the intelligent driving vehicle in the last AOI area.

In **step 707:** the model information of the existing AI model is changed according to the early warning information.

Specifically, the existing AI model may be a currently used or historically used model. The model information of the existing AI model includes at least one of parameter information of the existing AI model or structural information of the existing AI model.

As schematically shown in FIG. 9, the intelligent driving vehicle may call the existing AI model according to the early warning information. The existing AI model is the model used by the intelligent driving vehicle in history. At the same time, the intelligent driving vehicle may change the parameter information of the existing AI model according to the early warning information, so that the intelligent driving vehicle can be used in the AOI area.

FIG. 10 shows a flowchart of a method for sending and receiving early warning information provided by an exemplary embodiment of the present application. The embodiment of the present application is illustrated by applying the above method in the early warning system shown in FIG. 1 as an example. The above early warning system includes a first network element, a terminal and an application server. The subscriber may include at least one of a terminal or an application server, and the subscribed party may include at least one of a terminal, a mobile communication network, or an application server. Taking the first network element being NWDAF as an example, the method includes the following steps.

In **step 1001:** the subscriber sends a subscription request for early warning information to NWDAF.

Schematically, the subscription request includes request information related to early warning information.

The request information in the subscription request includes at least one of the following information: the identifier or group identifier of the subscribed party; the data flow information of the subscribed party; the early warning threshold; the value range of the early warning advance amount; whether to notify the estimated parameter value.

Schematically, the early warning information includes but is not limited to at least one of the following information: the estimated time length of triggering the early warning threshold, the confidence level of the early warning information, the QOS parameter of the subscribed party, the location information of the subscribed party, the degree of network congestion between the subscribed party and the NWDAF.

Specifically, there are many ways to implement the sending of the subscription request. For example, the terminal sends a subscription request for early warning information to NWDAF through a NAS message; the application server sends a subscription request for early warning information to NWDAF through NEF.

In **step 1002:** NWDAF monitors the target parameter of the subscribed party according to the subscription request.

Schematically, the target parameter of the subscribed party includes but is not limited to at least one of the following information: the QOS parameter of the subscribed party, the distance between the subscribed party and the designated area range, the degree of network congestion between the subscribed party and NWDAF, the power information of the subscribed party, the computing power information of the subscribed party.

In **step 1003:** NWDAF calculates the predicted target parameter of the subscribed party according to the monitoring result of the target parameter.

The predicted target parameter refers to a changed estimated amount calculated according to the target parameter of the subscribed party at the current moment. For example, the NWDAF acquires the value of the GBR of the terminal at the current moment through real-time monitoring, and based on this value, the value of the predicted GBR can be obtained.

According to different target parameters, the predicted target parameter includes but is not limited to at least one of the following information: the predicted QOS parameter of the subscribed party, the predicted distance between the subscribed party and the designated area range, the predicted degree of network congestion between the subscribed party and NWDAF, the predicted power information of the subscribed party, the predicted computing power information of the subscribed party.

Specifically, the predicted target parameter is calculated by NWDAF. For example, the target parameter of the terminal acquired by NWDAF is the power information of the terminal at the current moment, and in combination with the historical usage data of the terminal, NWDAF calculates and obtains the predicted power information.

In **step 1004:** in the case that the predicted target parameter triggers the early warning threshold, NWDAF sends early warning information to the subscriber.

Schematically, the early warning information includes an early warning advance amount, which is an estimated time value required for a target parameter to change to a predicted target parameter.

Equivalently, the advance warning amount refers to the estimated time length from the target parameter change to the predicted target parameter. For example, NWDAF acquires the GBR of the terminal at the current moment through real-time monitoring, and NWDAF calculates and obtains that the terminal will reach the estimated GBR after 10 seconds, then the early warning advance amount is 10 seconds.

Subsequently, NWDAF sends early warning information to the terminal and the application server. The early warning information includes the value of the estimated GBR and the early warning advance amount, and the early warning advance amount is 10 seconds.

Based on the early warning information sent by NWDAF, the terminal executes steps 1005 and 1007, and the application server executes steps 1006 and 1008. In the case that one of the terminal and the application server does not receive the early warning information sent by the first network element, the terminal and the application server do not perform the corresponding steps.

In **step 1005:** the terminal receives the early warning information.

Optionally, the early warning information is used by the subscriber to adjust the behavior of the application layer.

In **step 1006:** the application server receives the early warning information.

According to the foregoing content, there are many ways to send and receive the early warning information, including but not limited to at least one of the following ways: receiving and/or sending early warning information through NAS message; or receiving and/or sending early warning information through UPF; or, receiving and/or sending early warning information through NEF.

Schematically, one of step 1005 and step 1006 may be performed, step 1005 and step 1006 may be performed at the same time, or may not be performed at the same time, which is not limited here.

In **step 1007:** the terminal adjusts the behavior of the application layer according to the early warning information.

In **step 1008:** the application server adjusts the behavior of the application layer according to the early warning information.

According to the aforementioned content, the adjustment of the behavior of the application layer includes at least one of the following: division of the AI model, download of the AI model, deletion of the AI model, and change of model information of the AI model.

Specifically, the specific content of step 1007 and step 1008 is similar to step 706, which can be used as a reference and will not be repeated here. One of step 1007 and step 1008 can be performed, step 1007 and step 1008 can be performed at the same time, or cannot be performed at the same time, which is not limited here.

FIG. 11 shows a flowchart of a method for sending and receiving early warning information provided by an exemplary embodiment of the present application. The embodiment of the present application is illustrated by applying the above method to the early warning system shown in FIG. 1. The above early warning system includes a terminal, RAN, NWDAF and an application server. Taking the subscriber being a terminal and an application server and the subscribed party being a terminal as an example, the method includes the following steps.

In **step 1101:** the terminal sends a subscription request for early warning information to the NWDAF through the RAN.

In **step 1102:** the application server sends a subscription request for early warning information to NWDAF.

Schematically, the subscription request includes request information related to early warning information.

The request information in the subscription request includes at least one of the following information: a terminal identifier or terminal group identifier, data flow information of the terminal, an early warning threshold, a value range of early warning advance amount, whether to notify the estimated parameter value.

Schematically, the early warning information includes but is not limited to at least one of the following information: the estimated time length of triggering the early warning threshold, the confidence level of the early warning information, the QOS parameter, the location information of the terminal, the degree of network congestion of the terminal and the first network element.

Specifically, there are many ways to implement the sending of the subscription request. For example, the terminal sends a subscription request for early warning information to NWDAF through a NAS message, and the application server sends a subscription request for early warning information to NWDAF through NEF.

In **step 1103:** NWDAF monitors the target parameter of the terminal and makes a prediction in combination with historical data.

Schematically, the target parameter of the terminal includes but is not limited to at least one of the following information: the QOS parameter, the distance between the terminal and the designated area range, the degree of network congestion between the terminal and the first network element, the power information of the terminal, the computing power information of the terminal.

Specifically, the NWDAF calculates according to the target parameter of the terminal in combination with the historical data of the terminal, and obtains the predicted target parameter of the terminal. The predicted target parameter refers to a changed estimated amount calculated according to the target parameter of the terminal at the current moment. For example, the first network element acquires the value of the GBR of the terminal at the current moment through real-time monitoring, and can obtain the value of the predicted GBR based on this value.

According to different target parameters, the predicted target parameter includes but is not limited to at least one of the following information: the predicted QOS parameter, the predicted distance between the terminal and the designated area range, the predicted degree of network congestion between the terminal and the first network element, the predicted power information of the terminal, the predicted computing power information of the terminal.

In **step 1104:** NWDAF sends early warning information to the terminal.

In **step 1105:** NWDAF sends early warning information to the application server.

Schematically, the early warning information includes an early warning advance amount, the early warning information is used by the subscriber to adjust the behavior of the application layer, and the early warning advance amount is determined according to the time difference between the target parameter and the predicted target parameter. Equivalently, the early warning advance amount refers to the estimated time length from the target parameter change to the predicted target parameter.

Specifically, there are many ways to realize the sending of the early warning information. For example, the NWDAF sends early warning information to the terminal through the NAS message, and the NWDAF sends the early warning information to the application server through the NEF.

Based on the early warning information sent by the first network element, the terminal executes step 1106, and the application server executes step 1107. If one of the terminal and the application server does not receive the early warning information sent by the first network element, the terminal and the application server do not perform the corresponding steps.

In **step 1106:** the terminal adjusts the behavior of the application layer according to the early warning information.

In **step 1107:** the application server adjusts the behavior of the application layer according to the early warning information.

According to the aforementioned content, the adjustment of the behavior of the application layer includes at least one of the following: division of the AI model, download of the AI model, deletion of the AI model, and change of model information of the AI model.

Specifically, the specific content of step 1106 and step 1107 is similar to step 703, which can be used as a reference and will not be repeated here.

In summary, in the method for sending and receiving early warning information provided by the embodiment of the present application, the first network element monitors the target parameter of the subscribed party by receiving the subscriber's subscription request for early warning information, and sends the early warning information based on the monitoring result of the target parameter, and according to the received early warning information, the terminal and the application server can adjust the behavior of the application layer in advance.

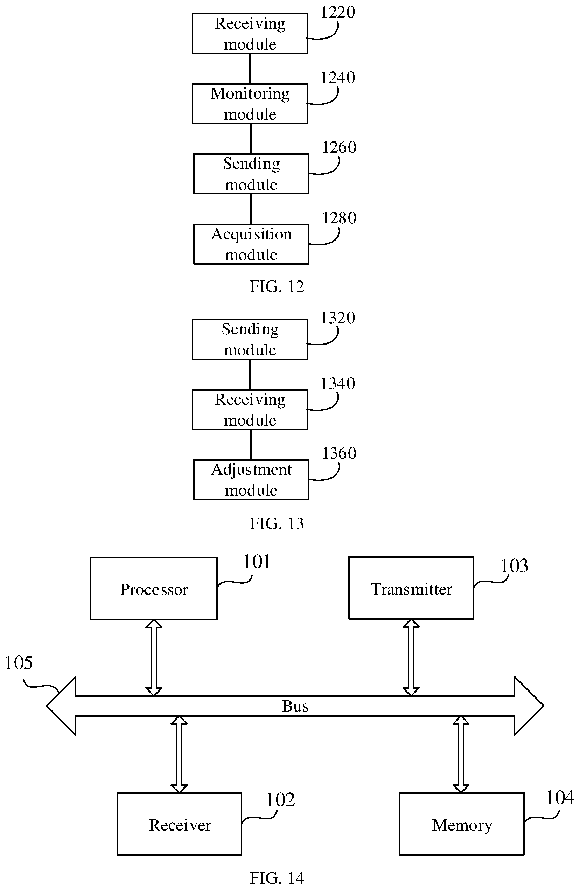

FIG. 12 shows a structural block diagram of an apparatus for subscribing early warning information provided by an exemplary embodiment of the present application. This apparatus may be implemented as a network element device, or as a part of a network element device. The apparatus includes:
a receiving module 1220, configured to receive a subscription request for early warning information from a subscriber, the subscription request being sent by at least one of a terminal or an application server;
a monitoring module 1240, configured to monitor a target parameter of a subscribed party according to the subscription request, the target parameter being used for determining early warning information;
a sending module 1260, configured to send early warning information based on the monitoring result of the target parameter;
where the subscriber includes at least one of a terminal or an application server.

In an optional design of the present application, the monitoring module 1240 is configured to monitor whether the target parameter of the subscribed party triggers the early warning threshold according to the subscription request; the sending module 1260 is configured to, in a case that the target parameter triggers the early warning threshold, send early warning information based on the monitoring result of the target parameter; or, in a case that the target parameter triggers the early warning threshold and a duration of the trigger reaches a preset time length, send the early warning information based on the monitoring result of the target parameter.

In an optional design of the present application, the monitoring module 1240 is configured to implement at least one of the following steps: monitoring whether the quality of service (QOS) parameter of the subscribed party reaches a first early warning threshold; monitoring whether a distance between the subscribed party and a designated area range reaches a second early warning threshold; monitoring whether a degree of network congestion between the subscribed party and a first network element reaches a third early warning threshold; monitoring whether power information of the subscribed party reaches a fourth early warning threshold; monitoring whether computing power information of the subscribed party reaches a fifth early warning threshold.

In an optional design of the present application, the monitoring module 1240 is configured to monitor whether a guaranteed bit rate (GBR) of the subscribed party reaches a first threshold; or, monitor whether a packet loss rate of the subscribed party reaches a second threshold; or, monitor whether a time delay of the subscribed party reaches a third threshold.

In an optional design of this application, the monitoring module 1240 is configured to calculate a predicted target parameter of the subscribed party based on the monitoring result of the target parameter according to the subscription request, or acquire the predicted target parameter of the subscribed party; the sending module 1260 is configured to send early warning information in a case that the predicted target parameter triggers the early warning threshold. The early warning information includes an early warning advance amount, and the early warning advance amount is an estimated time value required for the target parameter to change to the predicted target parameter.

In an optional design of the present application, the monitoring module 1240 is configured to implement at least one of the following steps: monitoring whether the predicted QOS parameter of the subscribed party reaches a first early warning threshold; monitoring whether a predicted distance between the subscribed party and the designated area range reaches a second early warning threshold, the predicted distance being used for indicating an estimated distance between the subscribed party and the designated area range after a specified time length; monitoring whether a predicted degree of network congestion between the subscribed party and the first network element reaches a third early warning threshold; monitoring whether predicted power information of the subscribed party reaches a fourth early warning threshold; monitoring whether predicted computing power information of the subscribed party reaches a fifth early warning threshold.

In an optional design of the present application, the monitoring module 1240 is configured to monitor whether the predicted GBR of the subscribed party reaches the first threshold; or, monitor whether the predicted packet loss rate of the subscribed party reaches the second threshold; or, monitor whether the predicted time delay of the subscribed party reaches the third threshold.

In an optional design of the present application, the early warning information includes at least one of the following information: an estimated time length of triggering the early warning threshold; a confidence level of the early warning information; the QOS parameter of the subscribed party; location information of the subscribed party; a degree of network congestion between the subscribed party and the first network element.

In an optional design of the present application, the apparatus further includes an acquisition module 1280, configured to acquire a target parameter in real time from the terminal and/or a second network element, where the second network element and the first network element are different network elements.

In an optional design of the present application, the receiving module 1220 is configured to receive request information of the subscription request through the NAS message; or, receive the request information through the UPF; or, receive the request information through the NEF.

In an optional design of the present application, the request information of the subscription request includes at least one of the following information: an identifier or group identifier of the subscribed party; data flow information of the subscribed party; an early warning threshold; a value range of early warning advance amount; whether to inform an estimated parameter value.

In an optional design of the present application, the sending module 1260 is configured to send early warning information through an NAS message based on the monitoring result of the target parameter; or, send early warning information through UPF based on the monitoring result of the target parameter; or, send early warning information through NEF based on the monitoring result of the target parameter.

In an optional design of the present application, the early warning information is used for adjusting a behavior of an application layer.

In an optional design of the present application, the adjustment of the behavior of the application layer includes at least one of the following: division of artificial intelligence (AI) model; downloading of AI model; deletion of AI model; change of model information of AI model.

FIG. 13 shows a structural block diagram of an apparatus for receiving early warning information provided by an exemplary embodiment of the present application. The apparatus may be implemented as a terminal, or as a part of a terminal, or as an application server, or as a part of the application server, the apparatus includes:
a sending module 1320, configured to send a subscription request for early warning information, the early warning information being generated by a first network element according to a monitoring result of a target parameter of a subscribed party;
a receiving module 1340, configured to receive early warning information;
where a subscriber includes at least one of a terminal or an application server.

In an optional design of the present application, the sending module 1320 is configured to send request information of early warning information through a NAS message; or send the request information through a UPF; or send the request information through a NEF.

In an optional design of the present application, the receiving module 1340 is configured to receive early warning information through a NAS message; or, receive the early warning information through a UPF; or receive the early warning information through a NEF.

In an optional design of the present application, the early warning information includes at least one of the following information: an estimated time length of triggering the early warning threshold; a confidence level of the early warning information; a QOS parameter of the subscribed party; location information of the subscribed party; a degree of network congestion of the subscribed party and the first network element.

In an optional design of the present application, the request information of the subscription request includes at least one of the following information: an identifier or group identifier of the subscribed party; data flow information of the subscribed party; an early warning threshold; a value range of an early warning advance amount; whether to inform an estimated parameter value.

In an optional design of the present application, the apparatus further includes an adjustment module 1360, configured to adjust a behavior of an application layer according to the early warning information.

In an optional design of the present application, the adjustment module 1360 is configured to adjust a split point of a first artificial intelligence (AI) model according to the early warning information.

In an optional design of the present application, the adjustment module 1360 is configured to adjust the split point of the first AI model when the target parameter or the predicted target parameter of the subscribed party triggers the early warning threshold, the predicted target parameter being determined based on the target parameter.

In an optional design of the present application, the adjustment module 1360 is configured to change the split point of the first AI model from the first split point to a second split point, the first split point and the second split point being different split points.

In an optional design of the present application, the adjustment module 1360 is configured to download a second AI model according to the early warning information.

In an optional design of the present application, the adjustment module 1360 is configured to download the second AI model when the target parameter or the predicted target parameter of the subscribed party triggers the early warning threshold, the predicted target parameter being determined according to the target parameter.

In an optional design of the present application, the adjustment module 1360 is configured to download model information of the second AI model, where the model information includes at least one of parameter information or structure information.

In an optional design of the present application, the adjustment module 1360 is configured to adjust and delete a third AI model according to the early warning information.

In an optional design of the present application, the adjustment module 1360 is configured to change model information of an existing AI model according to the early warning information.

Schematically, an embodiment of the present application also provides a network device. The network device includes a processor, a transceiver connected to the processor, and a memory for storing executable instructions of the processor. The processor is configured to load and execute the executable instructions to realize the above-mentioned method for sending early warning information.

Schematically, an embodiment of the present application also provides a terminal. The terminal includes a processor, a transceiver connected to the processor, and a memory for storing executable instructions of the processor. The processor is configured to load and execute executable instructions to realize the above-mentioned method for receiving early warning information.

Schematically, an embodiment of the present application also provides an application server. The application server includes a processor, a transceiver connected to the processor, and a memory for storing executable instructions of the processor. The processor is configured to load and execute the executable instructions realize the above-mentioned method for receiving early warning information.

Schematically, an embodiment of the present application also provides a computer-readable storage medium, in which executable instructions are stored, and the executable instructions are loaded and executed by a processor to implement the above-mentioned method for sending early warning information, or, the method for receiving early warning information.

FIG. 14 shows a schematic structural diagram of a communication device (terminal or network device) provided by an exemplary embodiment of the present application. The communication device includes: a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 may be implemented as one communication component, which can be one communication chip.

The memory 104 is connected to the processor 101 through the bus 105.

The memory 104 may be used to store at least one instruction, and the processor 101 is used to execute the at least one instruction, so as to implement each step of the method for determining an RAR reception window mentioned in the above method embodiments.

In addition, the memory 104 can be implemented by any type of volatile or non-volatile storage device or their combination. The volatile or non-volatile storage device includes but not limited to: a magnetic disk or an optical disk, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, a Programmable Read-Only Memory (PROM).

Those of ordinary skill in the art can understand that all or part of the steps for implementing the above embodiments can be completed by hardware, and can also be completed by instructing related hardware through a program. The program can be stored in a computer-readable storage medium. The above-mentioned storage medium may be a read-only memory, a magnetic disk or an optical disk, and the like.

The above are only optional embodiments of the present application, and are not intended to limit the present application. Any modifications, equivalent replacements, improvements, etc. made within the spirit and principles of the present application shall be included in the protection scope of the present application.

## Claims

1. A method for sending early warning information, wherein the method is applied to a first network element, and the method comprises:
receiving a subscription request for early warning information from a subscriber;
monitoring a target parameter of a subscribed party according to the subscription request, wherein the target parameter is used for determining the early warning information; and
sending the early warning information based on the monitoring result of the target parameter;
wherein the subscriber comprises at least one of a terminal or an application server.

2. The method according to claim 1, wherein the monitoring the target parameter of the subscribed party according to the subscription request comprises:
monitoring whether the target parameter of the subscribed party triggers an early warning threshold according to the subscription request;
the sending the early warning information based on the monitoring result of the target parameter comprises:
in a case that the target parameter triggers the early warning threshold, sending the early warning information based on the monitoring result of the target parameter;
or,
in a case that the target parameter triggers the early warning threshold and a duration of the trigger reaches a preset time length, sending the early warning information based on the monitoring result of the target parameter.

3. The method according to claim 2, wherein the monitoring whether the target parameter of the subscribed party triggers the early warning threshold comprises at least one of following steps:
monitoring whether a quality of service (QOS) parameter of the subscribed party reaches a first early warning threshold;
monitoring whether a distance between the subscribed party and a designated area range reaches a second early warning threshold;
monitoring whether a degree of network congestion between the subscribed party and the first network element reaches a third early warning threshold;
monitoring whether power information of the subscribed party reaches a fourth early warning threshold;
monitoring whether computing power information of the subscribed party reaches a fifth early warning threshold.

4. The method according to claim 3, wherein the monitoring whether the quality of service (QOS) parameter of the subscribed party reaches the first early warning threshold comprises:
monitoring whether a guaranteed bit rate (GBR) of the subscribed party reaches a first threshold;
or,
monitoring whether a packet loss rate of the subscribed party reaches a second threshold;
or,
monitoring whether a time delay of the subscribed party reaches a third threshold.

5. The method according to claim 1, wherein the monitoring the target parameter of the subscribed party according to the subscription request comprises:
according to the subscription request, calculating a predicted target parameter of the subscribed party based on the monitoring result of the target parameter, or acquiring the predicted target parameter of the subscribed party;
monitoring whether the predicted target parameter of the subscribed party triggers an early warning threshold;
the sending the early warning information based on the monitoring result of the target parameters comprises:
in a case that the predicted target parameter triggers the early warning threshold, sending the early warning information, wherein the early warning information comprises an early warning advance amount, and the early warning advance amount is an estimated time value required for the target parameter to change to the predicted target parameter.

6. The method according to claim 5, wherein the monitoring whether the predicted target parameter of the subscribed party triggers the early warning threshold comprises at least one of following steps:
monitoring whether a predicted QOS parameter of the subscribed party reaches a first early warning threshold;
monitoring whether a predicted distance between the subscribed party and a designated area range reaches a second early warning threshold, wherein the predicted distance is used for indicating an estimated distance between the subscribed party and the designated area range after a specified time length;
monitoring whether a predicted degree of network congestion between the subscribed party and the first network element reaches a third early warning threshold;
monitoring whether predicted power information of the subscribed party reaches a fourth early warning threshold;
monitoring whether predicted computing power information of the subscribed party reaches a fifth early warning threshold.

7. The method according to claim 6, wherein the monitoring whether the predicted quality of service (QOS) parameter of the subscribed party reaches the first early warning threshold comprises:
monitoring whether a predicted GBR of the subscribed party reaches a first threshold;
or,
monitoring whether a predicted packet loss rate of the subscribed party reaches a second threshold;
or,
monitoring whether a predicted time delay of the subscribed party reaches a third threshold.

8. The method according to any one of claims 2 to 7, wherein the early warning information comprises at least one of following information:
an estimated time length of triggering the early warning threshold;
a confidence level of the early warning information;
a QOS parameter of the subscribed party;
location information of the subscribed party;
a degree of network congestion between the subscribed party and the first network element.

9. The method according to any one of claims 1 to 7, wherein the method further comprises:
acquiring the target parameter from the terminal and/or a second network element, wherein the second network element and the first network element are different network elements.

10. The method according to any one of claims 1 to 7, wherein the receiving the subscription request for the early warning information comprises:
receiving request information of the subscription request through a non-access stratum (NAS) message;
or, receiving the request information through a user plane function (UPF);
or, receiving the request information through a network exposure function (NEF).

11. The method according to any one of claims 1 to 7, wherein request information of the subscription request comprises at least one of following information:
an identifier or group identifier of the subscribed party;
data flow information of the subscribed party;
an early warning threshold;
a value range of an early warning advance amount;
whether to inform an estimated parameter value.

12. The method according to any one of claims 1 to 7, wherein the sending the early warning information based on the monitoring result of the target parameter comprises:
based on the monitoring result of the target parameter, sending the early warning information through a non-access stratum (NAS) message;
or, based on the monitoring result of the target parameter, sending the early warning information through a user plane function (UPF);
or, based on the monitoring result of the target parameter, sending the early warning information through a network exposure function (NEF).

13. The method according to any one of claims 1 to 7, wherein the early warning information is used by the subscriber to adjust a behavior of an application layer.

14. The method according to claim 13, wherein the adjustment of the behavior of the application layer comprises at least one of following:
a division of an AI model;
a download of an AI model;
a deletion of an AI model;
a change of model information of an AI model.

15. A method for receiving early warning information, wherein the method is applied to a subscriber, and the method comprises:
sending a subscription request for early warning information, wherein the early warning information is generated by a first network element according to a monitoring result of a target parameter of a subscribed party;
receiving the early warning information;
wherein the subscriber comprises at least one of a terminal or an application server.

16. The method according to claim 15, wherein the sending the subscription request for the early warning information comprises:
sending request information of the subscription request through a non-access stratum (NAS) message;
or, sending request information through a user plane function (UPF);
or, sending request information through a network exposure function (NEF).

17. The method according to claim 15, wherein request information of the subscription request comprises at least one of following information:
an identifier or group identifier of the subscribed party;
data flow information of the subscribed party;
an early warning threshold;
a value range of an early warning advance amount;
whether to inform an estimated parameter value.

18. The method according to claim 15, wherein the receiving the early warning information comprises:
receiving the early warning information through a non-access stratum (NAS) message;
or, receiving the early warning information through a user plane function (UPF);
or, receiving the early warning information through a network exposure function (NEF).

19. The method according to claim 15, wherein the early warning information comprises at least one of following information:
an estimated time length of triggering the early warning threshold;
a confidence level of the early warning information;
a QOS parameter of the subscribed party;
location information of the subscribed party;
a degree of network congestion between the subscribed party and the first network element.

20. The method according to any one of claims 15 to 19, wherein the method further comprises:
adjusting a behavior of an application layer according to the early warning information.

21. The method according to claim 20, wherein the adjusting the behavior of the application layer according to the early warning information comprises at least one of following steps:
adjusting a split point of a first AI model according to the early warning information;
downloading a second AI model according to the early warning information;
adjusting and deleting a third AI model according to the early warning information;
changing model information of an existing AI model according to the early warning information.

22. An apparatus for subscribing to early warning information, wherein the apparatus comprises:
a receiving module, configured to receive a subscription request for early warning information from a subscriber, wherein the subscription request is sent by at least one of a terminal or an application server;
a monitoring module, configured to monitor a target parameter of a subscribed party according to the subscription request, wherein the target parameter is used for determining the early warning information;
a sending module, configured to send the early warning information based on the monitoring result of the target parameter;
wherein the subscriber comprises at least one of a terminal or an application server.

23. An apparatus for receiving early warning information, wherein the apparatus comprises:
a sending module, configured to send a subscription request for early warning information, wherein the early warning information is generated by a first network element according to a monitoring result of a target parameter of a subscribed party;
a receiving module, configured to receive the early warning information;
wherein a subscriber comprises at least one of a terminal or an application server.

24. A network device, wherein the network device comprises a processor, a transceiver connected to the processor, and a memory for storing executable instructions of the processor; wherein the processor is configured to load and execute the executable instructions to implement the method for sending early warning information according to any one of claims 1 to 14.

25. A terminal, wherein the terminal comprises a processor, a transceiver connected to the processor, and a memory for storing executable instructions of the processor, and the processor is configured to load and execute the executable instructions to implement the method for receiving early warning information according to any one of claims 15 to 20.

26. An application server, wherein the application server comprises a processor, a transceiver connected to the processor, and a memory for storing executable instructions of the processor, and the processor is configured to load and execute the executable instructions to implement the method for receiving early warning information according to any one of claims 15 to 20.

27. A computer-readable storage medium, wherein executable instructions are stored in the readable storage medium, and the executable instructions are loaded and executed by a processor to implement the method for sending early warning information according to any one of claims 1 to 14, or the method for receiving early warning information according to any one of claims 15 to 20.
